# EUROPEAN PATENT APPLICATION

(11) **EP 2 784 711 A2**
(43) Date of publication of application: **01.10.2014**
(21) Application number: 14160258.1
(22) Date of filing: 17.03.2014
(51) Int. Cl.: G06F 21/32, G06F 21/36

(54) **Terminal device and terminal control program**

(30) Priority: 27.03.2013 JP 2013067599
(71) Applicant: FUJITSU LIMITED, Kawasaki-shi, Kanagawa 211-8588 (JP)
(72) Inventor: Miyazaki, Eiji, Kawasaki-shi, Kanagawa 211-8588 (JP); Ishimaru, Yoshihiro, Kawasaki-shi, Kanagawa 211-8588 (JP); Sato, Kazuhiro, Kawasaki-shi, Kanagawa 211-8588 (JP); Ito, Takahiro, Sunnyvale, CA California 94085 (US)
(74) Representative: Ward, James Norman

(57) **Abstract**

Mobile terminal (10) includes: a memory (17) that holds information in which each of a plurality of unlocking methods that releases a locked state restricting an operation is associated with an application or a category of the application; and a processor (20) that is connected to the memory (17). In response to an operation to release the locked state, the processor (20) executes a process of referring to the information and starting up or displaying an application associated with the unlocking method used to release the locked state.

## Description

### FIELD

The embodiments discussed herein are related to a terminal device and a terminal control program.

### BACKGROUND

In recent years, an application such as a game, online shopping, or an SNS (Social Networking Service) is installed and run on a mobile terminal such as a smartphone, a tablet terminal, or a mobile phone.

Considering that billing or the like is performed depending on the type of application, the mobile terminal has improved security by transitioning to a locked state by a user operation or the like and turning into a state in which no operation is accepted. Then, in the known technology, a screen that is operated before the mobile terminal transitions to the locked state is displayed when an operation to release the locked state is accepted.
Patent Literature 1: Japanese Laid-open Patent Publication No. 2009-86889
Patent Literature 2: Japanese Laid-open Patent Publication No. 2009-104540
Patent Literature 3: International Publication Pamphlet No. 2011/077525

The aforementioned technology however has a problem of user inconvenience because the screen, after being unlocked, is transitioned to a desired screen when a screen different from the screen operated before transitioning to the locked state is to be operated.

For example, a user exits an application being displayed after the mobile terminal is unlocked, searches for a desired application, and starts up the desired application being searched for. Therefore, the aforementioned technology rather impedes the improvement of convenience in some cases.

Accordingly, it is an object in one aspect of an embodiment of the invention to provide a terminal device and a terminal control program which can improve user convenience after releasing a locked state.

### SUMMARY

According to an aspect of the embodiments, a terminal device (10) includes a memory (17) that stores information in which each of a plurality of unlocking methods that releases a locked state restricting an operation is associated with an application or a category of the application; and a processor (20) connected to the memory (17), wherein the processor (20) executes a process including: referring to the information, and starting or displaying an application associated with an unlocking method used to release the locked state, in response to an operation to release the locked state.

### BRIEF DESCRIPTION OF DRAWINGS

FIG. 1 is a diagram illustrating a mobile terminal according to a first embodiment;
FIG. 2 is a block diagram illustrating a configuration of the mobile terminal according to the first embodiment;
FIG. 3 is a diagram illustrating an example of a screen transition destination table stored in the mobile terminal according to the first embodiment;
FIG. 4 is a diagram illustrating pattern authentication;
FIG. 5 is a diagram illustrating authentication using a personal identification number;
FIG. 6 is a diagram illustrating touch authentication;
FIG. 7 is a diagram illustrating fingerprint authentication;
FIG. 8 is a flowchart illustrating the flow of a screen transition process executed by the mobile terminal according to the first embodiment;
FIG. 9 is a diagram illustrating an example of a screen transition destination table stored in a mobile terminal according to a second embodiment;
FIG. 10 is a flowchart illustrating the flow of a screen transition process executed by the mobile terminal according to the second embodiment;
FIG. 11 is a diagram illustrating an example of a screen transition destination table stored in a mobile terminal according to a third embodiment; and
FIG. 12 is a flowchart illustrating the flow of a screen transition process executed by the mobile terminal according to the third embodiment.

### DESCRIPTION OF EMBODIMENTS

Preferred embodiments of the present invention will be explained with reference to accompanying drawings.

Each of the embodiments below may also be combined as appropriate without causing any inconsistency.

### [a] First Embodiment

### Description of mobile terminal

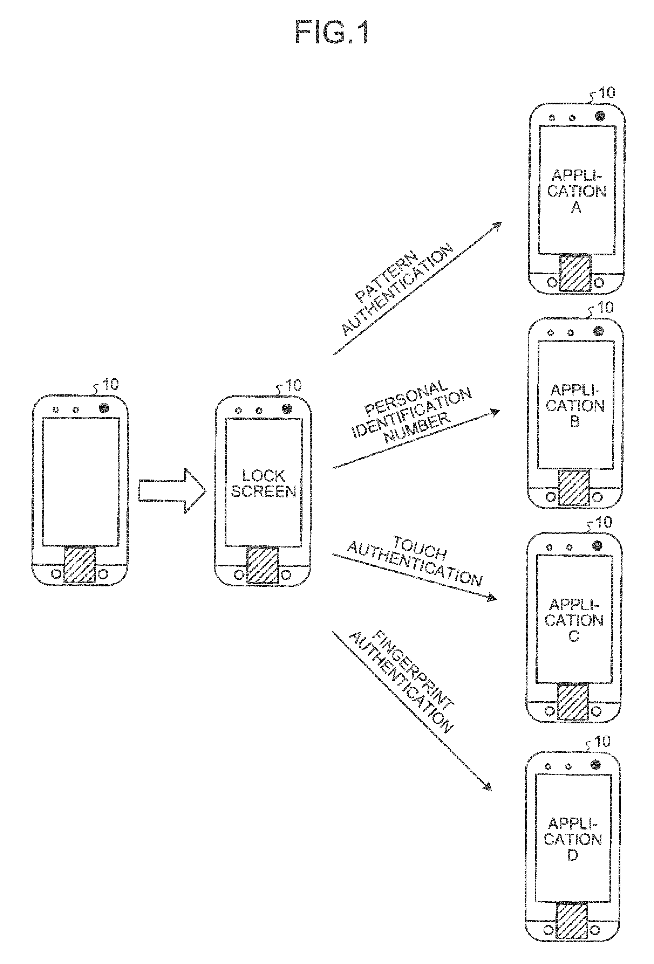

FIG. 1 is a diagram illustrating a mobile terminal according to a first embodiment. A mobile terminal 10 illustrated in FIG. 1 is an example of a terminal device such as a smartphone, a tablet terminal, a mobile phone, or a personal computer. The mobile terminal 10 transitions to a locked state, in which an operation is restricted, when no operation is accepted for a predetermined period of time or when a lock operation is accepted. While in the locked state, the mobile terminal 10 restricts a predetermined operation such as a transmission or access to the Web until a correct unlocking operation is accepted.

The mobile terminal 10 according to the first embodiment has a plurality of authentication methods to release a lock. The plurality of authentication methods employed by the mobile terminal 10 uses pattern authentication, personal identification number authentication, touch authentication, and fingerprint authentication, for example. The pattern authentication is an example of the authentication method by which the lock is released depending on whether or not a path traced over a plurality of regions displayed on a screen of the mobile terminal 10 in the locked state matches a path that is pre-registered by a user to release the lock.

The personal identification number authentication is an example of the authentication method by which the lock is released depending on whether or not a personal identification number accepted by the mobile terminal 10 in the locked state matches a personal identification number that is pre-registered by the user to release the lock.

The touch authentication is an example of the authentication method by which authentication is executed by a personal identification number while using a pattern input screen. Specifically, the touch authentication is executed by mapping a number in each of a plurality of regions displayed on the screen of the mobile terminal 10 in the locked state and specifying a personal identification number from a path of the regions traced by the user. The touch authentication then releases the lock depending on whether or not the specified personal identification number matches a personal identification number that is pre-registered by the user to release the lock.

The fingerprint authentication is an example of the authentication method by which, upon reading a fingerprint of the user by a fingerprint reading unit of the mobile terminal 10, the lock is released depending on whether or not the fingerprint being read matches a fingerprint of the user pre-registered by the user.

The mobile terminal 10 including these plurality of unlocking methods holds information in which each of the plurality of unlocking methods is associated with an application or a category of an application, the plurality of unlocking methods releasing the locked state in which an operation is restricted. When releasing the locked state, the mobile terminal 10 displays a screen of an application associated with the unlocking method that is used to release the locked state.

On a display, the mobile terminal 10 displays a screen of an application A corresponding to the pattern authentication when the locked state is released by the pattern authentication, for example, and displays a screen of an application B corresponding to the personal identification number authentication when the locked state is released by the personal identification number.

Therefore, the mobile terminal 10 according to the first embodiment associates each of the plurality of unlocking methods with the application or the category of the application in advance so that, at the time of releasing the lock, the screen of the application corresponding to the unlocking method used to release the lock can be displayed. The mobile terminal 10 according to the first embodiment can therefore improve convenience after releasing the lock because the user can display a screen of a desired application immediately after releasing the lock.

### Configuration of mobile terminal

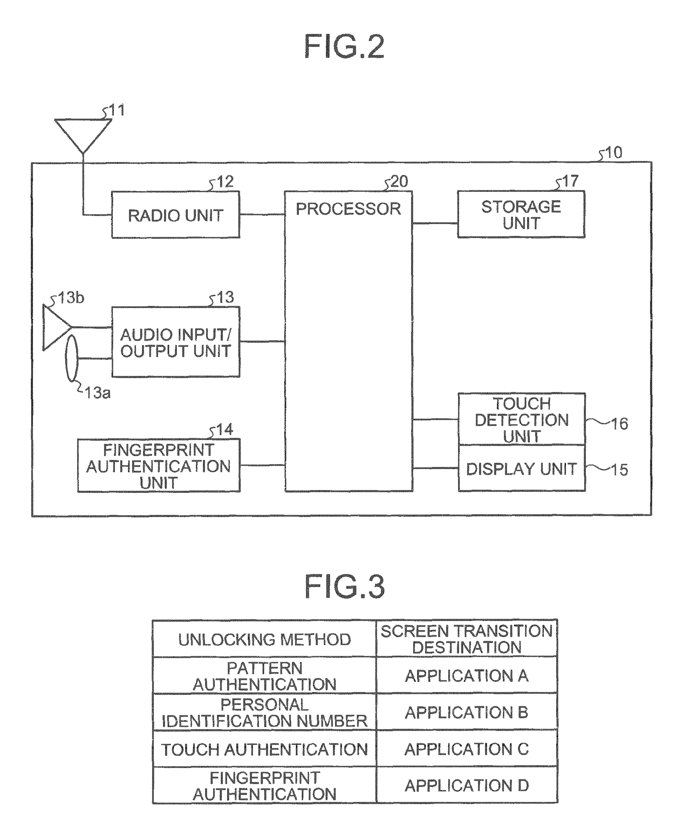

FIG. 2 is a block diagram illustrating a configuration of the mobile terminal according to the first embodiment. As illustrated in FIG. 2, the mobile terminal 10 includes an antenna 11, a radio unit 12, an audio input/output unit 13, a fingerprint authentication unit 14, a display unit 15, a touch detection unit 16, a storage unit 17, and a processor 20. Note that the hardware configuration illustrated in FIG. 2 is provided as an example, and thus another hardware such as a short-distance radio unit may also be included.

The antenna 11 is an example of a transmitter-receiver that transmits/receives a radio signal of various data. The radio unit 12 is an example of a CCPU (Communication Central Processing Unit) or the like that performs radio communication through the antenna 11. The radio unit 12 receives a signal through the antenna 11 and outputs the received signal to the processor 20, for example. The radio unit 12 also transmits a signal generated by the processor 20 through the antenna 11. The radio unit 12 transmits/receives a signal of spoken voice of the user or received voice when the mobile terminal 10 is a mobile phone that can make a call, for example.

The audio input/output unit 13 is an example of an input/output interface that collects and outputs voice. For example, the audio input/output unit 13 performs audio processing on the voice collected by a microphone 13a and, at the same time, performs audio processing on an audio signal within a radio signal received through the radio unit 12 and outputs sound from a speaker 13b.

The fingerprint authentication unit 14 is an example of a processor having a sensor which reads a fingerprint and executing user authentication by the fingerprint being read. For example, the fingerprint authentication unit 14 reads a fingerprint by the sensor and permits authentication when the fingerprint being read matches a fingerprint stored in the storage unit 17 or the like. On the other hand, the fingerprint authentication unit 14 denies authentication when the fingerprint being read by the sensor does not match the fingerprint stored in the storage unit 17 or the like. The fingerprint authentication unit 14 outputs an authentication result to the processor 20.

The display unit 15 is an example of a display or a touch panel on which various information is displayed. The display unit 15 displays an operation screen of an application run by the processor 20 and outgoing/incoming call information, for example. The touch detection unit 16 is an example of an interface that detects information operated on the display unit 15. Specifically, the touch detection unit 16 detects information operated by the user on the touch panel and outputs the detected information to the processor 20. The touch detection unit 16 specifies a touched position by detecting the change in capacitance caused by a touch on the display unit 15, for example.

The storage unit 17 is a storage that stores data and various programs used to perform various functions of the mobile terminal 10. An example of the storage unit 17 includes a ROM (Read Only Memory), a RAM (Random Access Memory), or a hard disk.

The storage unit 17 also stores various information used to release the lock. The storage unit 17 stores, for example, a registered path that is registered by the user to be used in the pattern authentication, a personal identification number registered by the user, and fingerprint information of the user.

The storage unit 17 further stores a screen transition destination table that is used in specifying a screen to be displayed after releasing the locked state. FIG. 3 is a diagram illustrating an example of the screen transition destination table stored in the mobile terminal according to the first embodiment. The screen transition destination table stores an "unlocking method" in association with a "screen transition destination" as illustrated in FIG. 3. The "unlocking method" stored here represents an unlocking method used to release the locked state in which an operation is restricted, while the "screen transition destination" represents a name or the like of an application that is displayed on the screen upon after releasing the lock. Note that the information stored here is registered by the user and can be updated at any time.

FIG. 3 illustrates a case where the screen of the application A is displayed when the locked state is released by the pattern authentication, and the screen of the application B is displayed when the locked state is released by the authentication using the personal identification number. FIG. 3 further illustrates that a screen of an application C is displayed when the locked state is released by the touch authentication and that a screen of an application D is displayed when the locked state is released by the fingerprint authentication.

The processor 20 controls the entire mobile terminal 10 by using a program or data stored in the ROM or the RAM included in the storage unit 17. An example of the processor 20 includes a CPU (Central Processing Unit) and an MPU (Micro Processing Unit).

The processor 20 executes various processes corresponding to various processings by expanding the program stored in the ROM or the like into the RAM. When the touch detection unit 16 accepts an operational input by a touch of the user, for example, the processor 20 executes a process in accordance with the operational input and displays a result of the execution on the display unit 15.

A specific example of the process executed by the processor 20 will now be described. Note that the processor 20 executes a general process executed by the mobile terminal 10, but the description of the process will be omitted. The general process includes Web processing, transmitting/receiving an e-mail, running various applications such as a game and an SNS, and downloading/installing the application.

### Process of transitioning to locked state

Upon accepting the lock operation, the processor 20 transitions the mobile terminal 10 to the locked state in which a function is restricted. As another example, the processor 20 may also transition the mobile terminal 10 to the locked state when a screen operation on the display unit 15 or the like is not accepted for a predetermined period of time. This process of transitioning to the locked state allows the mobile terminal 10 to maintain high security, inhibit a misuse by an unauthorized user, and inhibit execution of an unintended process.

### Table generation and deleting process

The processor 20 generates the screen transition destination table by a user operation. When an instruction to generate a table is accepted by the touch detection unit 16, for example, the processor 20 displays on the display unit 15 a table illustrated in FIG. 3 in which a column corresponding to the "screen transition destination" is left blank. The processor 20 then accepts an input for the "screen transition destination" corresponding to each "unlocking method" and generates the screen transition destination table.

Illustrated in FIG. 3 is an example where the processor 20 associates each "unlocking method" included in the mobile terminal 10 with the "screen transition destination". However, the processor 20 can also make the user select the "unlocking method" to be associated, for example. The processor 20 can further change the association between the "unlocking method" and the "screen transition destination" by accepting an operation to change the screen transition destination table at any time. The user can generate any combination by this process and can therefore generate the table flexibly according to the frequency or purpose of use.

### Unlocking process

The processor 20 releases the locked state when the unlocking operation is executed normally. At this time, the processor 20 displays the screen of the application corresponding to the unlocking method used to release the locked state, when releasing the locked state.

Specifically, when any of the unlocking methods included in the mobile terminal 10 is selected and executed normally, the processor 20 specifies a screen transition destination corresponding to the selected unlocking method from the screen transition destination table. The processor 20 then releases the lock after transitioning the screen on the display unit 15 to the specified screen transition destination.

This means that, upon releasing the lock normally, the processor 20 releases all or a part of a process being restricted while the screen displayed on the display unit 15 remains locked. The processor 20 then displays an operation screen of the specified application on the display unit 15 while restricting an operation to the mobile terminal 10. Subsequently, the processor 20 releases the restriction on an operation to the mobile terminal 10 and releases the locked state.

When the application specified as the screen transition destination is not yet started, the processor 20 starts up the application and displays a top screen or an operation screen thereof. When the application specified as the screen transition destination has already been started, on the other hand, the processor 20 reads the application in the memory and displays a screen being read. Note that one can arbitrarily set and change which screen in which state of the application to display.

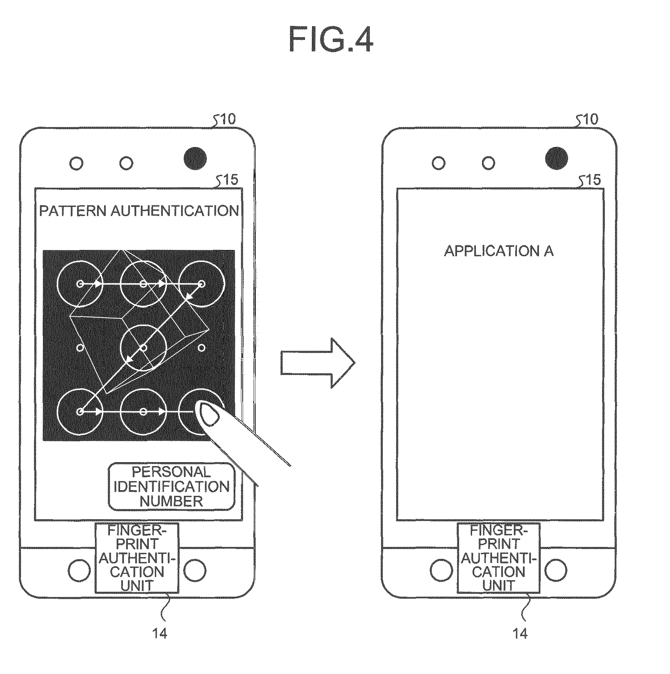

FIG. 4 is a diagram illustrating the pattern authentication. As illustrated in FIG. 4, the processor 20 displays a pattern authentication screen on the display unit 15 when a request to perform the pattern authentication is accepted by the touch detection unit 16 or the like in the locked state. The processor 20 then acquires, through the touch detection unit 16, a path of operation by the user. Thereafter, the processor 20 determines whether or not the acquired path of operation matches a registered path stored in the storage unit 17. When the two paths match each other, the processor 20 transitions the display on the display unit 15 to an operation screen of the application A corresponding to the pattern authentication in the screen transition destination table. The processor 20 thereafter releases the locked state and displays the operation screen of the application A on the display unit 15.

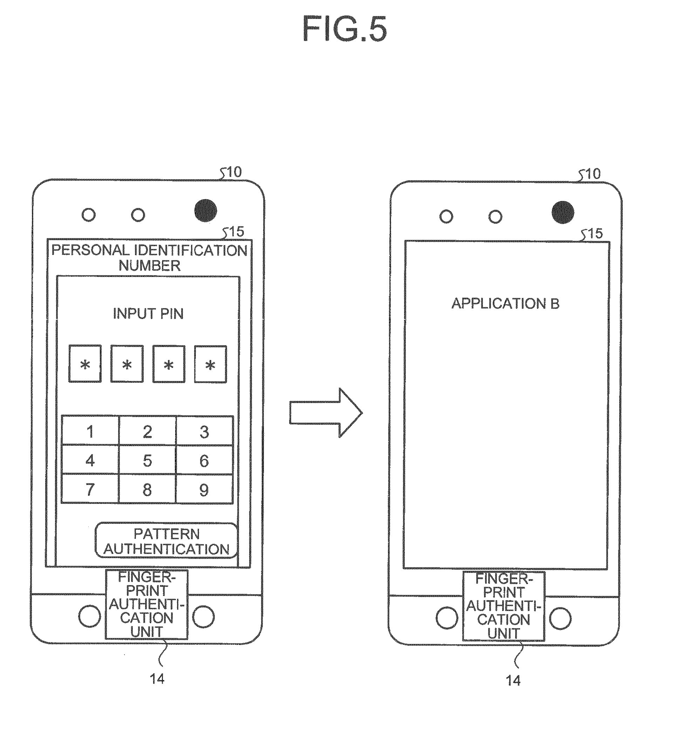

FIG. 5 is a diagram illustrating the authentication using the personal identification number. As illustrated in FIG. 5, the processor 20 displays a screen to accept the personal identification number on the display unit 15 when a request to input the personal identification number is accepted by the touch detection unit 16 or the like in the locked state. The processor 20 then accepts an input of the personal identification number through the touch detection unit 16. Subsequently, the processor 20 determines whether or not the accepted personal identification number matches a registered personal identification number stored in the storage unit 17. When the two numbers match each other, the processor 20 transitions the display on the display unit 15 to an operation screen of the application B corresponding to the authentication using the personal identification number in the screen transition destination table. The processor 20 thereafter releases the locked state and displays the operation screen of the application B on the display unit 15.

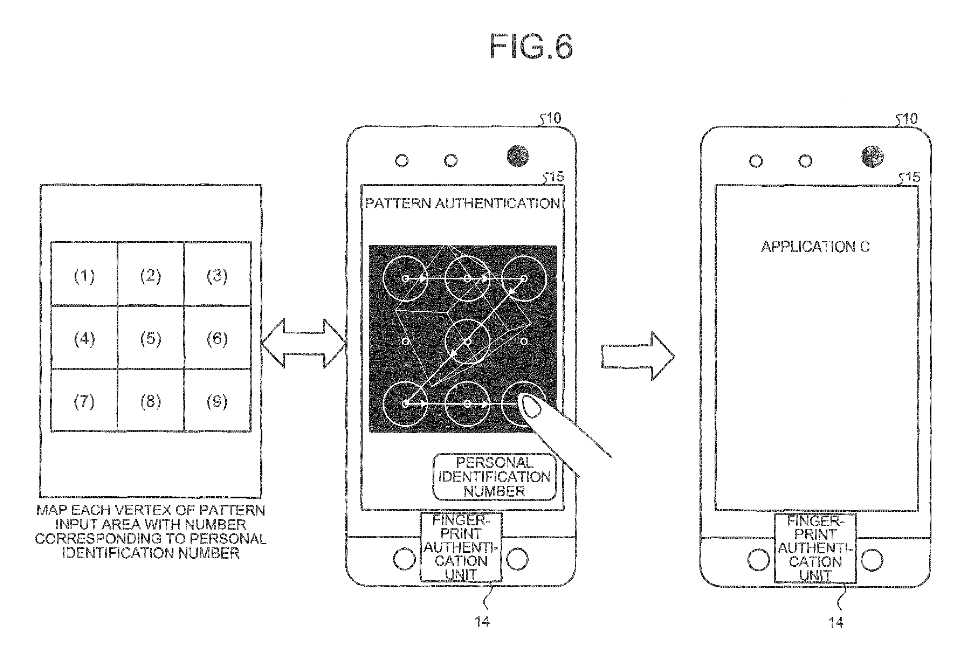

FIG. 6 is a diagram illustrating the touch authentication. As illustrated in FIG. 6, the processor 20 displays a pattern authentication screen on the display unit 15 when a request to perform the touch authentication is accepted by the touch detection unit 16 or the like in the locked state. Note that the pattern authentication screen displayed in this case is configured by a pattern input region that is divided into a plurality of regions, each of which is associated with a number. The processor 20 then acquires a path of operation by the user through the touch detection unit 16. Subsequently, the processor 20 specifies the personal identification number from the acquired path of operation. The processor 20 then determines whether or not the accepted personal identification number matches the registered personal identification number stored in the storage unit 17. When the two numbers match each other, the processor 20 transitions the display on the display unit 15 to an operation screen of the application C corresponding to the touch authentication in the screen transition destination table. The processor 20 thereafter releases the locked state and displays the operation screen of the application C on the display unit 15.

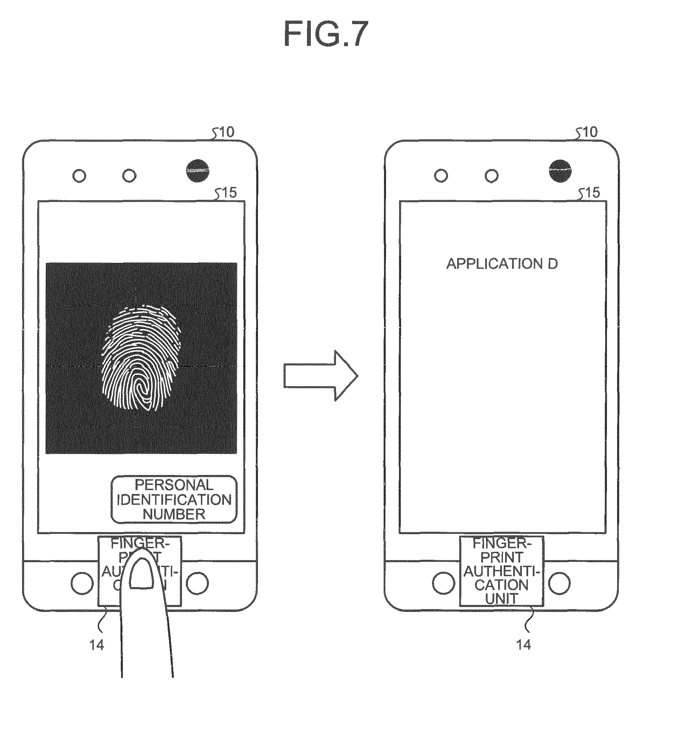

FIG. 7 is a diagram illustrating the fingerprint authentication. As illustrated in FIG. 7, the fingerprint authentication unit 14 in the locked state detects a fingerprint from a finger of the user upon detecting a touch by the finger. The fingerprint authentication unit 14 then determines whether or not the detected fingerprint matches a registered fingerprint stored in the storage unit 17. When the two fingerprints match each other, the fingerprint authentication unit 14 outputs an instruction to permit authentication to the processor 20. Upon accepting the permission for authentication from the fingerprint authentication unit 14, the processor 20 transitions the display on the display unit 15 to an operation screen of the application D corresponding to the fingerprint authentication in the screen transition destination table. The processor 20 thereafter releases the locked state and displays the operation screen of the application D on the display unit 15.

### Process flow

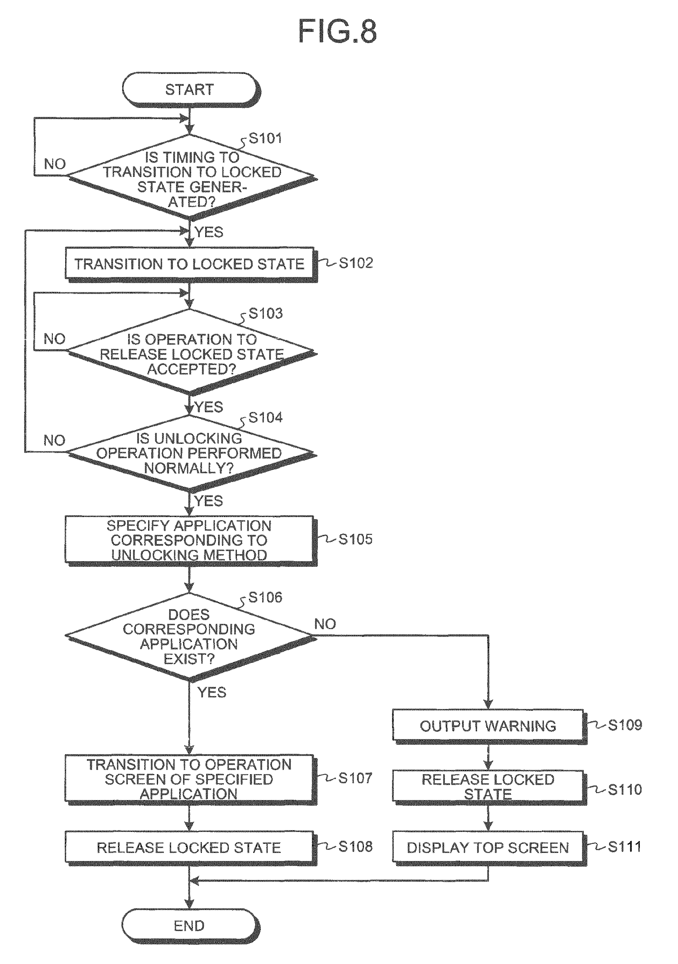

FIG. 8 is a flowchart illustrating the flow of a screen transition process executed by the mobile terminal according to the first embodiment. As illustrated in FIG. 8, the processor 20 transitions the mobile terminal 10 to the locked state (S102) when a timing to transition to the locked state is generated (S101: Yes).

Upon accepting an operation to release the locked state (S103: Yes), the processor 20 determines whether or not the unlocking operation has been executed correctly (S104). Determining that the unlocking operation has been executed correctly (S104: Yes), the processor 20 specifies the application stored in association with the executed unlocking method in the screen transition destination table (S105). The processor 20 returns to S102 to keep the locked state when the unlocking operation has not been executed correctly (S104: No).

Subsequently, the processor 20 determines whether or not the application is associated with the unlocking operation being executed in the screen transition destination table (S106). When the application is associated in the table (S106: Yes), the processor 20 transitions the display on the display unit 15 to the operation screen of the application being associated (S107) and then releases the locked state (S108).

When no application is associated in the table (S106: No), on the other hand, the processor 20 outputs a warning on the display screen (S109). Here, a warning such as "No corresponding application found. Please register an application." can be output, for example.

Thereafter, the processor 20 releases the locked state (S110) and displays a top screen on the display unit 15 (S111). While the top screen is displayed here as an example, the processor 20 may also display a screen immediately preceding the locked state or may select a screen from applications being executed in the memory.

### Effects

On the basis of the associated information registered by the user, as described above, the mobile terminal 10 can display the screen of the application the user wishes to display after releasing the locked state. This can therefore suppress the user inconvenience of having to maneuver to the screen of the desired application after releasing the lock. As a result, the mobile terminal 10 can improve the user convenience after releasing the locked state.

Moreover, the mobile terminal 10 transitions the display on the display unit 15 to the operation screen of the application behind a lock screen and then releases the locked state, namely the display of the lock screen, the application being specified on the basis of the unlocking method. The mobile terminal 10 can thus avoid flickering of the screen accompanying the screen transitioning after releasing the lock.

The mobile terminal 10 can also register a plurality of paths by which the authentication is permitted in the pattern authentication and associate each path with the application at the screen transition destination. In this case, the mobile terminal 10 can change a screen of the application to be displayed after releasing the lock depending on the path. When the plurality of paths is associated, however, there is an increased possibility that the locked state is released by a careless operation because there is an increased number of paths by which the lock can be released. Moreover, a large number of paths possibly registered rather makes the user operation complicated, and the user can possibly forget the path as well. This method can therefore decrease security or user convenience. Compared to this method, the mobile terminal 10 described in the first embodiment can improve the user convenience and suppress the decrease in security.

### [b] Second Embodiment

While there has been described a case in the first embodiment where each unlocking method is held in association with the application, the mobile terminal 10 can also hold each unlocking method in association with a category of the application, for example. Now, in a second embodiment, there will be described the screen transition where each unlocking method is held in association with the category of the application.

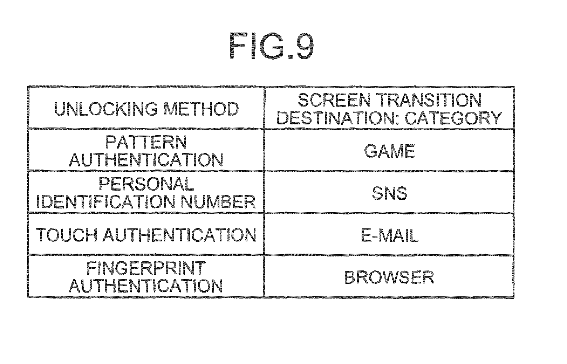

Screen transition destination table FIG. 9 is a diagram illustrating an example of a screen transition destination table stored in a mobile terminal according to the second embodiment. As illustrated in FIG. 9, a storage unit 17 of a mobile terminal 10 holds the screen transition destination table in which an "unlocking method" is associated with a "screen transition destination: category". The "unlocking method" represents an unlocking method used to release a locked state in which an operation is restricted, while the "screen transition destination: category" represents a category of an application to be displayed on a screen in releasing a lock.

FIG. 9 illustrates a case where a screen of an application, the category thereof belonging to a game, is displayed when the locked state is released by pattern authentication. A screen of an application, the category thereof belonging to an SNS, is displayed when the locked state is released by authentication using a personal identification number. A screen of an application, the category thereof belonging to an e-mail, is displayed when the locked state is released by touch authentication. Moreover, a screen of an application, the category thereof belonging to a browser, is displayed when the locked state is released by fingerprint authentication.

Note that information stored here is registered by a user and can be updated at any time. The classification of the category may be manually set by the user or can be set by using automatic recognition or the like of the mobile terminal 10. That is, the setting of whether an application A corresponds to the SNS or the game may be performed by the user or automatically by the mobile terminal 10.

In this state, a processor 20 of the mobile terminal 10 counts the number of times each application is used and stores it in the storage unit 17. The processor 20 further counts the number of times each application is used within a predetermined period of time and stores it in the storage unit 17. Note that the processor 20 may store the count result by classifying a region or the like for each category. The processor 20 then displays a screen of the application having a high use count or use frequency from among the applications belonging to the category associated with the unlocking method that is used to release the locked state.

When it is permitted to release the locked state by the pattern authentication, for example, the processor 20 specifies the category "game" corresponding to the pattern authentication. The processor 20 then refers to the count result stored in the storage unit 17 and specifies an application X that has the highest use count from among the applications belonging to the category "game". Thereafter, the processor 20 displays a screen of the application X when releasing the lock.

When it is permitted to release the locked state by the fingerprint authentication, the processor 20 specifies the category "browser" corresponding to the fingerprint authentication. The processor 20 then refers to the count result stored in the storage unit 17 and specifies a Web page Y that is accessed most frequently in the past ten minutes from among the applications belonging to the category "browser". Thereafter, the processor 20 displays a screen of the Web page Y when releasing the lock.

### Process flow

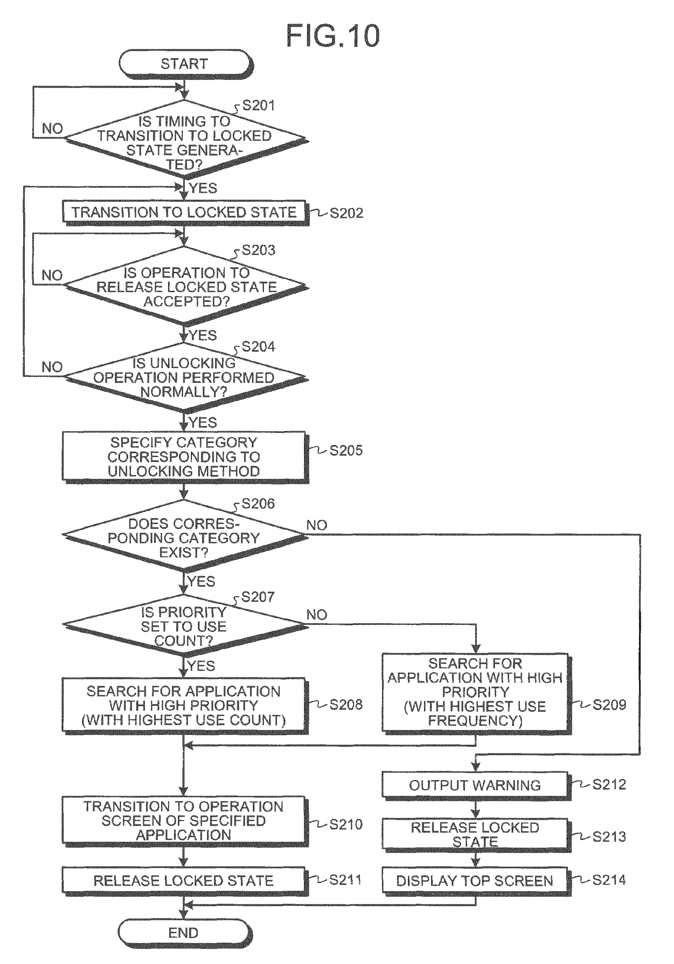

FIG. 10 is a flowchart illustrating the flow of a screen transition process executed by the mobile terminal according to the second embodiment. As illustrated in FIG. 10, the processor 20 transitions the mobile terminal 10 to the locked state (S202) when a timing to transition to the locked state is generated (S201: Yes).

Upon accepting an operation to release the locked state (S203: Yes), the processor 20 determines whether or not the unlocking operation has been executed correctly (S204). Determining that the unlocking operation has been executed correctly (S204: Yes), the processor 20 specifies the category of the application stored in association with the executed unlocking method in the screen transition destination table (S205). Note that the processor 20 returns to S202 to keep the locked state when the unlocking operation has not been executed correctly (S204: No).

Subsequently, the processor 20 determines whether or not the category of the application is associated with the executed unlocking operation in the screen transition destination table (S206). When the category is associated in the table (S206: Yes), the processor 20 determines whether or not priority is set to the use count (S207).

When the priority is set to the use count (S207: Yes), the processor 20 searches for an application having the highest use count up to this point from among the applications belonging to the specified category (S208). When the priority is set to the use frequency (S207: No), on the other hand, the processor 20 searches for an application having the highest use frequency from among the applications belonging to the specified category (S209).

Thereafter, the processor 20 transitions the display on the display unit 15 to an operation screen of the searched application (S210) and then releases the locked state (S211).

When it is determined in S206 that no category is associated (S206: No), the processor 20 outputs a warning on the display screen (S212). The processor 20 then releases the locked state (S213) and displays a top screen on the display unit 15 (S214).

### Effects

The mobile terminal 10 therefore provides improved user convenience because the application with high utilization can be automatically displayed after releasing the locked state. Note that the priority can be set/changed to the use count or the use frequency at will. The use frequency can be determined by how often an application is used during a predetermined period of time such as 10 minutes. Moreover, the processor 20 can display a warning such as "No application can be started" on the display unit 15 when the category can be specified but an application belonging to the category does not exist.

### [c] Third Embodiment

While there has been described a case in the second embodiment where each unlocking method is held in association with the category of the application, the mobile terminal 10 can also hold priority in association with each unlocking method and the category of the application, the priority being set in accordance with a communication state of the mobile terminal 10, for example. Now, in a third embodiment, there will be described the screen transition where each unlocking method, the category of the application, and the priority are held in association with one another.

### Screen transition destination table

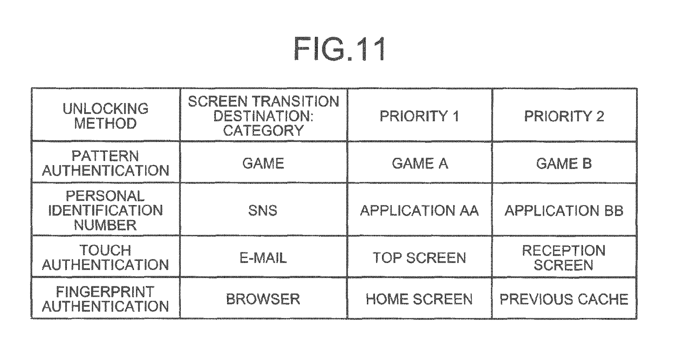

FIG. 11 is a diagram illustrating an example of a screen transition destination table stored in a mobile terminal according to the third embodiment. As illustrated in FIG. 11, a storage unit 17 of a mobile terminal 10 holds the screen transition destination table in which an "unlocking method", a "screen transition destination: category", "priority 1" and "priority 2" are associated with one another.

The "unlocking method" represents an unlocking method used to release a locked state in which an operation is restricted, while the "screen transition destination: category" represents a category of an application to be displayed on a screen in releasing a lock. The "priority 1" represents an application to be displayed when a transmission rate or a radio wave condition is at a predetermined value or greater. The "priority 2" represents an application to be displayed when the transmission rate or the radio wave condition is less than the predetermined value.

FIG. 11 illustrates a case where a screen of a game A, the category thereof belonging to a game, is displayed when an unlocking operation is performed normally by pattern authentication while the communication state is in high-speed communication such as Wi-Fi (Wireless Fidelity: registered trademark) or LTE (Long Term Evolution: registered trademark). A screen of a game B, the category thereof belonging to the game, is displayed when the locked state is released by the pattern authentication in relatively low-speed communication such as 3G network.

A screen of an application AA, the category thereof belonging to an SNS, is displayed when the unlocking operation is performed normally by a personal identification number while the communication state is in the high-speed communication. Moreover, a screen of an application BB, the category thereof belonging to the SNS, is displayed when the unlocking operation is performed normally by the personal identification number in the relatively low-speed communication.

A top screen of an e-mail application, the category thereof belonging to an e-mail, is displayed when the unlocking operation is performed normally by touch authentication while the communication state is in the high-speed communication. A reception screen of the e-mail application, the category thereof belonging to the e-mail, is displayed when the unlocking operation is performed normally by the touch authentication in the relatively low-speed communication.

A home screen set to a browser, the category thereof belonging to a browser, is displayed when the unlocking operation is performed normally by fingerprint authentication while the communication state is in the high-speed communication. A screen being cached at a previous time, the category thereof belonging to the browser, is displayed when the unlocking operation is performed normally by the fingerprint authentication in the relatively low-speed communication.

Note that information stored here is registered by a user and can be updated at any time. The classification of the category may be manually set by the user or can be set by using automatic recognition or the like of the mobile terminal 10. Moreover, the unlocking method and each of the priorities may be associated with one another without associating the category.

In this state, a processor 20 of the mobile terminal 10 determines the priority to be referenced according to the transmission rate or the radio wave condition from among the applications belonging to the category corresponding to the unlocking method that is used to release the locked state. The processor 20 then displays an operation screen of an application corresponding to the priority being determined.

### Process flow

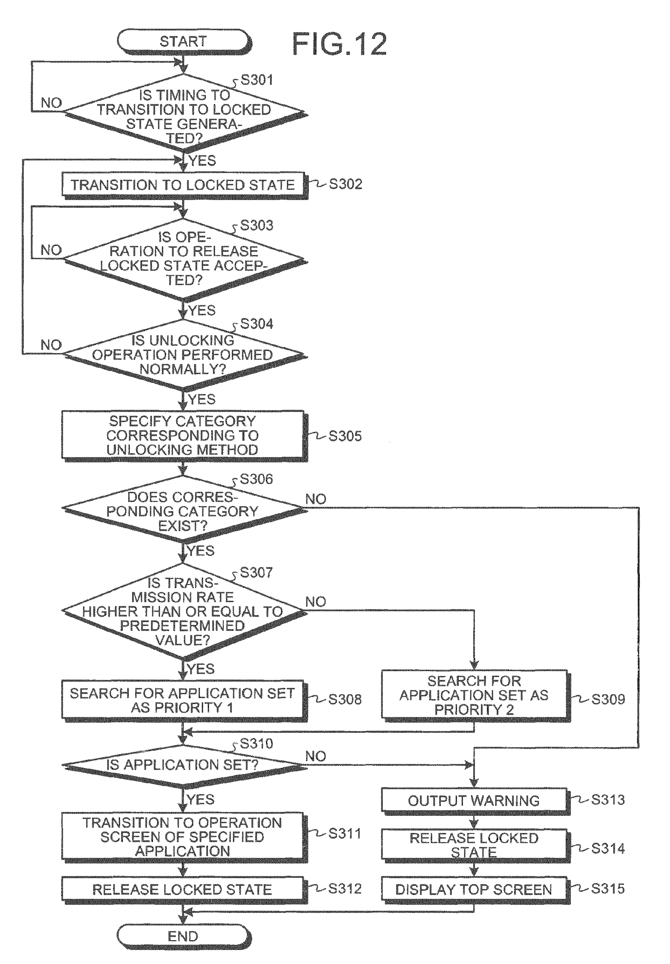

FIG. 12 is a flowchart illustrating the flow of a screen transition process executed by the mobile terminal according to the third embodiment. Detailed description of a process performed from S301 to S306 as illustrated in FIG. 12 will be omitted since the process is similar to that performed from S201 to S206 illustrated in FIG. 10.

When it is determined in S306 that a category corresponding to the unlocking method exists (S306: Yes), the processor 20 determines whether or not the transmission rate is at a predetermined value or higher (S307). The processor 20 can make this determination by measuring and saving a rate at the most recent data transmission and finding whether or not the rate is higher than or equal to a threshold, for example. The processor 20 can also make the determination on the basis of a communication method currently used by the mobile terminal 10.

When the transmission rate is at the predetermined value or higher (S307: Yes), the processor 20 refers to the screen transition destination table and searches for the application set as the priority 1 among the applications belonging to the specified category (S308). When the transmission rate is lower than the predetermined value (S307: No), on the other hand, the processor 20 refers to the screen transition destination table and searches for the application set as the priority 2 among the applications belonging to the specified category (S309).

Subsequently, the processor 20 determines whether or not the application is associated in the screen transition destination table (S310). When the application is associated in the table (S310: Yes), the processor 20 transitions the display on the display unit 15 to an operation screen of the application (S311) and then releases the locked state (S312).

When the application is not associated in the screen transition destination table (S310: No), on the other hand, the processor 20 outputs a warning such as "No corresponding application found" on the display screen (S313). Thereafter, the processor 20 releases the locked state (S314) and displays the top screen on the display unit 15 (S315). Note that the processor 20 executes the process from S313 to S315 as well when determining in S306 that no corresponding category exists (S306: No).

### Effects

As described above, the mobile terminal 10 according to the third embodiment can dynamically change the application to be displayed after releasing the lock according to the transmission rate or the radio wave condition. That is, the mobile terminal 10 displays the screen of the application which performs communication after start-up or performs communication using high-speed communication, when the transmission rate is high or the radio wave condition is greater than or equal to a predetermined value and is satisfactory. On the other hand, the mobile terminal 10 can display the screen of the application which does not perform communication after start-up or does not perform communication using the high-speed communication, when the transmission rate is low or the radio wave condition is less than the predetermined value and is unsatisfactory.

Accordingly, the mobile terminal 10 can display the screen of the application that is appropriate depending on the communication state. As a result, the application can be operated with no problem after releasing the lock so that the user can comfortably operate the application after the lock is released. For example, there can be suppressed a situation where the user is unable to operate the application for an extended period of time because the application displayed after releasing the lock in an unsatisfactory communication environment takes a long time to complete data reception after starting the data reception.

### [d] Fourth Embodiment

While the embodiments of the present invention have been described up to this point, the present invention may also be implemented in various different modes other than the embodiments described above. A different embodiment will be described below.

### Unlocking method

The unlocking method described in the first to third embodiments is illustrative and not to limit a number or a method, whereby another unlocking method included in the mobile terminal 10 can be adopted. Moreover, the type or the like of the category used in the classification can be set and changed at will by the user.

### Communication state

While the transmission rate is illustrated as the communication state of the mobile terminal 10 in the third embodiment, there can also be used a communication method, the radio wave condition, a roaming state or a combination of these, for example. An application which does not perform communication may have higher priority when roaming, for example.

While the two priorities are associated in the example illustrated in the third embodiment, three or more priorities can be associated in accordance with the classification of the communication state as well. Moreover, the mobile terminal 10 can not only make the user set the application corresponding to each priority but also set the application automatically in accordance with the use count or the use frequency. When the user associates in advance the priority 1 with an "application which does not generate communication", for example, the mobile terminal 10 can automatically select and display the application with the highest use count or use frequency among the applications which do not generate communication.

When a plurality of priorities is set and the application with the highest priority does not exist since it is deleted, for example, the mobile terminal 10 can display a screen of the application having the second highest priority. Note that the screen of the application the display is transitioned to can also be set at will. The operation screen, the top screen, a screen operated recently, or a screen that has been updated can be set, for example.

### Table setting

While there has been described the example in the first to third embodiments where the "unlocking method" is associated with the name or the like of the "application", the "unlocking method" may also be associated with information such as an "application used before unlocking" that can specify the application, for example.

### Unlocking order

While there has been described the example in the first to third embodiments where the mobile terminal 10 releases the locked state after transitioning the display on the display unit 15 to the screen of the corresponding application, the mobile terminal 10 can also display the screen of the corresponding application on the display unit 15 after releasing the locked state, for example.

### Selection of authentication method

There has been described the example in the first to third embodiments where the mobile terminal 10 stands by while having each authentication method available even in the locked state and executes the aforementioned process upon detecting that the authentication by any of the authentication methods is started. In other words, the mobile terminal 10 executes the aforementioned process upon detecting the start of the authentication by the user operation or the like. Other than this method, the mobile terminal 10 can also display a list of unlocking methods upon accepting the operation on the display screen in the locked state, so that any of the unlocking methods can be selected. In this case, the mobile terminal 10 can suppress the function of each authentication method while in the locked state, thereby leading to power saving as well.

### System

All or a part of the process described to be performed automatically, among each of the processes described in the present embodiments, can be performed manually as well. Alternatively, all or a part of the process described to be performed manually can be performed automatically by a known method. In addition, the process procedure, the control procedure, the specific name, and the information including various data and parameters illustrated herein and in the drawings can be changed at will unless otherwise specified.

Each component of each device is illustrated to provide a functional concept and does not always have to be physically configured as illustrated in the drawings. That is, the specific mode of breakup or integration of each device is not limited to what is illustrated in the drawings. This means that all or a part of the device can be configured by functionally or physically breaking up/integrating it by an arbitrary unit in accordance with various loads or use conditions. Moreover, all or an arbitrary part of each processing function performed in each device can be implemented by a CPU and a program analyzed/executed by the CPU or as hardware employing wired logic.

An aspect of the terminal device and the terminal control program disclosed in the present application can improve the user convenience after releasing the locked state.

## Claims

1. A terminal device (10) comprising:
a memory (17) that stores information in which each of a plurality of unlocking methods that releases a locked state restricting an operation is associated with an application or a category of the application; and
a processor (20) connected to the memory (17), wherein the processor (20) executes a process including:
referring to the information, and
starting or displaying an application associated with an unlocking method used to release the locked state, in response to an operation to release the locked state.

2. The terminal device (10) according to claim 1, wherein the starting or the displaying includes starting or displaying the application on the basis of a use count or a use frequency among applications belonging to a category that is associated with the unlocking method used to release the locked state.

3. The terminal device (10) according to claim 1, wherein
the memory stores information in which priority according to a communication state of the terminal device is further associated with the application or each category, and
the starting or the displaying includes starting or displaying the application on the basis of the priority determined according to the communication state of the terminal device, from among the application associated with the unlocking method used to release the locked state or applications belonging to the category.

4. The terminal device (10) according to claim 3, wherein
the memory stores priority in association according to a transmission rate or a radio wave condition as the communication state of the terminal device, and
the starting or the displaying includes starting or displaying the application on the basis of the priority determined according to the transmission rate or the radio wave condition, from among the applications belonging to the category associated with the unlocking method used to release the locked state.

5. A terminal control program causing a terminal device (10) to execute a process comprising:
referring to information in which each of a plurality of unlocking methods that releases a locked state restricting an operation is associated with an application or a category of the application; and
starting or displaying an application associated with an unlocking method used to release the locked state in response to an operation to release the locked state.
